# EUROPÄISCHE PATENTANMELDUNG

(11) **EP 1 632 345 A2**
(43) Veröffentlichungstag der Anmeldung: **08.03.2006**
(21) Anmeldenummer: 05018900.0
(22) Anmeldetag: 31.08.2005
(51) Int. Cl.: B32B 27/08, E04D 12/00

(54) **Mehrschichtfolie mit einstellbarer Wasserdampfdurchlässigkeit**

(30) Priorität: 06.09.2004 DE 102004043010; 06.09.2004 DE 202004013819 U; 17.08.2005 DE 102005038863
(71) Anmelder: Silu Verwaltung AG, 6045 Meggen (CH)
(72) Erfinder: Sieber, Marco, 6048 Horw (CH); Sieber, Reto, 6019 Sigigen (CH)
(74) Vertreter: Peterreins, Frank

(57) **Zusammenfassung**

Die Erfindung betrifft eine wasserdichte und wasserdampfdurchlässige Mehrschichtfolie, insbesondere zur Abdichtung beim Hausbau im Dachbereich, mit einer wasserdampfdurchlässigen Basisschicht aus einem ersten Kunststoffmaterial und mit zumindest einer mit der Basisschicht gekoppelten wasserdampfdurchlässigkeits-kontrollierenden zweiten Schicht aus einem zweiten Kunststoffmaterial. Die Basisschicht ist wasserdicht für entspanntes Wasser und die Mehrschichtfolie ist dehnbar und reißfest. Die wasserdampfdurchlässigkeits-kontrollierende zweite Schicht ist erfindungsgemäß mit makroskopischen Löchern versehen, durch deren Anordnung ein definierter Flächenanteil aus dem zweiten Kunststoffinaterial entfernt ist, so dass die Wasserdampfdurchlässigkeit der Mehrschichtfolie eingestellt ist. Die Erfindung betrifft auch die Verwendung einer solchen Mehrschichtfolie als Klebeband und/oder Dampfbremse und/oder Fassadenfolie und/oder Aufdachfolie, insbesondere zur Abdichtung beim Hausbau im Dachbereich. Die Erfindung betrifft ferner auch ein System, welches aus der oben beschriebenen Mehrschichtfolie und einem Klebeband besteht, welches aus der Mehrschichtfolie besteht.

## Beschreibung

Die Erfindung betrifft eine Mehrschichtfolie, die wasserdicht und wasserdampfdurchlässig ist, zum Beispiel zur Abdichtung beim Hausbau, insbesondere im Dachbereich, mit einer wasserdampfdurchlässigen Basisschicht aus einem ersten Kunststoffmaterial und mit zumindest einer mit der Basisschicht gekoppelten wasserdampfdurchlässigkeits-kontrollierenden zweiten Schicht aus einem zweiten Kunststoffmaterial gemäß dem Oberbegriff des Anspruchs 1, die Verwendung einer solchen Mehrschichtfolie als Klebeband und/oder Dampfbremse und/oder Fassadenfolie und/oder Aufdachfolie, ein System aus einer solchen Mehrschichtfolie und einer solchen als Klebeband gestalteten Mehrschichtfolie und ein Verfahren zur Herstellung einer solchen Mehrschichtfolie.

Allgemein wird es aufgrund zunehmender umweltbezogener Bauauflagen beim Hausbau und bei der Hausrenovierung immer wichtiger, den Dachbereich, insbesondere unter dem Dach und/oder auf dem Dach, und/oder den Fassadenbereich wasserdicht und wasserdampfdurchlässig abzudichten, um ein angenehmes und gesundes Wohnklima zu schaffen und dennoch ein Eindringen von Regenwasser zu verhindern. Bei der Verlegung und Verklebung von entsprechenden Folie ist dabei von besonderer Bedeutung, dass nicht durch Verwerfungen in den Folien im Bereich von Fugenverklebungen zwischen den Folienbahnen offene Stellen in der Abdichtung auftreten. Ferner ist darauf zu achten, dass die Wasserdampfdurchlässigkeit der verwendeten Materialien groß genug ist, dass es unter den entsprechenden Folien nicht zu Kondenswasserbildung kommt. Die oben genannten Probleme treten insbesondere bei herkömmlichen Abdichtungen auf, bei welchen Folien/Klebebänder Verwendung finden, welche Verwerfungen und Fugenöffnungen nicht bis zu einem gewissen Grad flexibel ausgleichen können und welche eine falsch angepasste Wasserdampfdurchlässigkeit (eine zu geringe oder zu hohe Wasserdampfdurchlässigkeit) aufweisen. Bei allen oben genannten Anforderungen ist ferner zu berücksichtigen, dass gerade im Hausbau eine ausreichende Festigkeit und mechanische Stabilität der verwendeten Materialien gegeben sein muss. Auch sollte eine Folie bzw. ein Klebeband möglichst einfach und kostengünstig mit reproduzierbaren Produkteigenschaften herstellbar sein.

Üblicherweise werden Folien aus Kunststoffmaterial, z.B. entsprechende Polymerfilme, entweder als Mono- oder Mehrschichtfolien geblasen oder gegossen. Typische Verfahrensweisen werden in der Literatur beschrieben, beispielsweise von K. R. Osborn und W. A. Jenkins, Plastic Films: Technology and Packaging Applications, Technomic Publishing Co., Inc., Lancaster, Pa., 1992. Zwar können Eigenschaften solcher Folien wie etwa Zugfestigkeit und Dehnbarkeit beispielsweise durch geeignete Wahl der Foliendicke oder des verwendeten Polymers in weiten Bereichen variiert werden, die Wasserdampfdurchlässigkeit lässt sich jedoch nicht beliebig geeignet einstellen und ist für bestimmte Einsatzzwecke, wie oben beschrieben und z.B. auch bei der Anwendung solcher Folien für Lebensmittelverpackungen, zu gering. Auch die Festigkeit und mechanische Stabilität ist dabei nicht unter allen Umständen gegeben. Ferner sind bekannte Folienmaterialien teuer und in der Herstellung aufwändig. Die Produkteigenschaften solcher Folien sind schwierig reproduzierbar einzustellen.

Das US-Patent US 6,540,949 beschreibt ein Verfahren zur Herstellung von biorientierten Polyethylenfolien mit hoher Wasserdampfdurchlässigkeit. Dabei wird eine wasserdampfdurchlässige Basisfolie aus einem ersten Kunststoffinaterial mit einer oder mehreren sehr dünnen, maximal etwa 0,0038 mm dicken wasserdampfdurchlässigkeits-kontrollierenden Folienschichten beschichtet. Der Grad der Wasserdampfdurchlässigkeit wird dabei über die Wasserdampfdurchlässigkeit der Basisschicht und die Dicke der wasserdampfdurchlässigkeits-kontrollierenden Folienschicht(en) festgelegt. Da die Dicke der wasserdampfdurchlässigkeits-kontrollierenden Folienschicht(en) jedoch sehr gering ist, kann diese Dicke und somit die resultierende Wasserdampfdurchlässigkeit der ausgebildeten Mehrschichtfolie kaum präzise gesteuert werden. Da außerdem die Basisfolie durch den Zusatz von Füllstoffen eine mikroporöse Struktur aufweist und die Dicke der zusätzlichen wasserdampfdurchlässigkeits-kontrollierenden Folienschicht(en) sehr gering ist, weisen die so hergestellten Mehrschichtfolien keine unter alle Umständen zufriedenstellende Zugfestigkeit, mechanische Stabilität und Dehnbarkeit auf. Macht man die in dem genannten US-Patent beschriebenen Folienschichten jedoch beliebig dicker, so nimmt dadurch jedoch wiederum die Wasserdampfdurchlässigkeit ab, so dass sie bei einer Dicke der Basisfolie von etwa 0,05 mm in etwa auf dem Niveau herkömmlicher Folien liegt.

Aus der Offenlegungsschrift DE 101 16 477 A1 ist eine dampfdiffusionsoffene und wasserdichte Dachunterspannbahn aus einem aufwändigen mindestens dreilagigen Verbund auf Basis thermoplastischer Kunststoffe bekannt, mit einer dampfdurchlässigen, dachinnenseitigen Schicht aus porösem Substrat, einer dampfdurchlässigen aber flüssigkeitsundurchlässigen Mittelschicht aus poröser Folie und einer dampfdurchlässigen aber flüssigkeitsundurchlässigen geprägten und gelochten Folie mit dreidimensional strukturierter Oberfläche. Um die mechanische Festigkeit zu gewährleisten ist noch eine zusätzliche dachinnenseitig angeordnete Gelege-Schicht vorgesehen. Eine Dehnbarkeit der Dachunterspannbahn ist nicht gegeben.

Die Offenlegungsschrift DE 198 19 085 A1 beschreibt ein wasserdichtes und wasserdampfdurchlässiges Flachmaterial aus einer mikroporösen Folie und einer wasserdichten Membran, welches relativ teure Materialien verwendet und dessen Produkteigenschaften über die verwendeten Schichtdicke der Folie bzw. der Membran eingestellt werden müssen. Zur Sicherstellung einer hohen Stabilität ist eine zusätzliche Verstärkungsschicht vorgesehen.

Das Gebrauchsmuster DE 297 00 987 U1 beschreibt eine diffusionsoffene Dachunterspannbahn aus einem mindestens dreilagigen Verbund mit äußeren Fliesschichten und einer inneren mikroporösen Folienschicht ohne Löcher.

Allgemein weisen Mehrschichtfolien auf Basis von mikroporösen Folien den Nachteil auf, dass sie für entspanntes Wasser undicht sind. Solches entspanntes Wasser, d.h. Wasser mit einer herabgesetzten Oberflächenspannung, kann beispielsweise auftreten, wenn sich entsprechende Schmutzstoffe im Dachbereich mit Regenwasser mischen. Entspanntes Wasser bildet keine Tropfen, bzw. neigt dazu keine Tropfen zu bilden. Entspanntes Wasser im obigen Sinne sowie im Sinne der folgenden Beschreibung und der Ansprüche soll definiert sein als Wasser mit einer Oberflächenspannung von 0,04 N/m bis 0,045 N/m, zum Beispiel Seifenwasser hergestellt durch Zusatz von Spül- oder Waschmittel zu destilliertem Wasser.

Es ist die Aufgabe der vorliegenden Erfindung, eine Mehrschichtfolie, die wasserdicht und wasserdampfdurchlässig ist, insbesondere zur Abdichtung beim Hausbau im Dachbereich vorzusehen, welche die Nachteile von Folien des Standes der Technik überwindet, insbesondere eine Mehrschichtfolie vorzusehen, welche eine sehr gute mechanische Stabilität bietet und einfach, kostengünstig und mit reproduzierbaren Produkteigenschaften herstellbar ist, wobei die Wasserdampfdurchlässigkeit einstellbar ist. Auch entsprechendes Herstellungsverfahren für eine solche Mehrschichtfolie soll vorgesehen sein.

Bevorzugt soll die erfindungsgemäße Mehrschichtfolie ferner eine besonders hohe Wasserdampfdurchlässigkeit und eine hohe Widerstandsfähigkeit gegen mechanische Belastungen, wie Zugbelastungen, und eine hohe Dehnbarkeit besitzen.

Die Aufgabe wird erfindungsgemäß durch eine Mehrschichtfolie mit den Merkmalen gemäß Anspruch 1, eine Verwendung der entsprechenden Mehrschichtfolie gemäß Anspruch 30, 31, 32 sowie ein entsprechendes System gemäß Anspruch 33 und/oder einem Verfahren zur Herstellung einer solchen Mehrschichtfolie gemäß Anspruch 34 gelöst. Bevorzugte erfindungsgemäße Ausführungsformen sind in den abhängigen Ansprüchen definiert.

Die erfindungsgemäße Mehrschichtfolie ist wasserdicht und wasserdampfdurchlässig gestaltet und weist eine hohe mechanische Stabilität auf. Sie dient insbesondere zur Abdichtung beim Hausbau im Dachbereich. Die erfindungsgemäße Mehrschichtfolie weist eine wasserdampfdurchlässige, wasserdichte Basisschicht aus einem ersten Kunststoffmaterial auf und zumindest eine mit der Basisschicht gekoppelte wasserdampfdurchlässigkeits-kontrollierende zweite Schicht aus einem zweiten Kunststoffmaterial auf. Gemäß der Erfindung ist die Basisschicht wasserdicht für entspanntes Wasser ist. Ferner ist die Mehrschichtfolie erfindungsgemäß dehnbar und reißfest. Die wasserdampfdurchlässigkeits-kontrollierende zweite Schicht ist mit makroskopischen Löchern versehen ist, durch deren Anordnung ein definierter Flächenanteil aus dem zweiten Kunststoffmaterial entfernt ist, so dass die Wasserdampfdurchlässigkeit der Mehrschichtfolie eingestellt ist. Je mehr Kunststoffmaterial entfernt ist, desto größer ist die Wasserdampfdurchlässigkeit. Durch die erfindungsgemäße Kombination der für entspanntes Wasser wasserdichten Basisschicht und der zumindest einen wasserdampfdurchlässigkeits-kontrollierenden zweiten Schicht, wobei die Mehrschichtfolie dehnbar sein kann mit einer bestimmten Reißfestigkeit, und wobei diese zweite Schicht mit makroskopischen Löchern versehen ist, durch deren Anordnung ein definierter Flächenanteil aus dem Material der zweiten Schicht entfernt ist, ist es möglich, besonders kostengünstig eine mechanisch belastbare und stabile Mehrschichtfolie vorzusehen, welche wasserdicht und wasserdampfdurchlässig ist und bei welcher die Wasserdampfdurchlässigkeit auf einfache Art und Weise einstellbar ist. Insbesondere ist das Vorsehen von Löchern, wobei durch die Anzahl, Größe und Lage der erfindungsgemäß vorgesehenen Löcher in der zweiten Schicht, bestehend aus dem zweiten Kunststoffmaterial, die entsprechende Wasserdampfdurchlässigkeit besonders einfach einstellbar ist, wesentlich einfacher und reproduzierbarer zu realisieren als beispielsweise die Einstellung der Dicke einer (sehr dünnen!) zusätzlichen Beschichtung. Insbesondere kann die mechanische Belastbarkeit mit der Wahl verschiedener Dicken der zweiten Schicht je nach Anwendung der Mehrschichtfolie beliebig eingestellt werden, ohne dass deshalb die Wasserdampfdurchlässigkeit beeinflusst wird.

Die erfindungsgemäße reißfeste Mehrschichtfolie weist gemäß einer bevorzugten Ausführungsform eine Reißfestigkeit nach DIN 53504 auf von über 3 N/mm², bevorzugt von über 5 N/mm², bevorzugter von über 7 N/mm², besonders bevorzugt von über 9 N/mm², ganz besonders bevorzugt von über 11 N/mm², oder von über 13 N/mm² oder am meisten bevorzugt von über 15 N/mm².

Die makroskopischen Löcher können bevorzugt rund, oval, quadratisch, rechteckig, rautenförmig oder in anderer Weise gestaltet sein, wobei die Anordnung in Art einer dichtesten Kugelpackung, in Reihen und Spalten oder über die Fläche gleichmäßig verteilt und/oder zufällig angeordnet vorgesehen sein kann.

Der Durchmesser der makroskopischen Löcher liegt bevorzugt in einem Bereich von 0,1 mm bis 100 mm, vorzugsweise von 0,2 mm bis 50 mm, bevorzugter von 0,4 mm bis 20 mm, besonders bevorzugt von 0,5 mm bis 8 mm und am meisten bevorzugt von 0,6 mm bis 6 mm. Es handelt sich dabei um den (größten) Durchmesser im Falle von runden bzw. ovalen makroskopischen Löchern oder um die Kantenlänge im Falle von mehrwinkligen makroskopischen Löchern.

Bevorzugt ist die Wasserdampfdurchlässigkeit des ersten Kunststoffmaterials größer als die Wasserdampfdurchlässigkeit des zweiten Kunststoffmaterials. Dadurch kann die Wasserdampfdurchlässigkeit der Mehrschichtfolie auf besonders einfache Art und Weise eingestellt werden, da somit durch die Anzahl, Größe und Lage der erfindungsgemäß vorgesehenen Löcher in der zweiten Schicht, bestehend aus dem zweiten Kunststoffmaterial, besonders einfach änderbar ist und somit im Zusammenwirken mit der größeren Wasserdampfdurchlässigkeit des ersten Kunststoffmaterials die (Gesamt)-Wasserdampfdurchlässigkeit der erfindungsgemäßen Mehrschichtfolie einstellbar macht.

Es kann auch bevorzugt sein, dass die Wasserdampfdurchlässigkeit des ersten Kunststoffmaterials größer ist als die Wasserdampfdurchlässigkeit bzw. die Gesamtwasserdampfdurchlässigkeit der erfindungsgemäßen Mehrschichtfolie. Dies ergibt sich schon aus der Tatsache, dass die erfindungsgemäße Mehrschichtfolie mit zumindest zwei Schichten (die Basisschicht und die zumindest eine zweite Schicht) vorgesehen ist.

Die Bestimmung der Wasserdampfdurchlässigkeit wird nach DIN 53122-1, Teil 1, gravimetrisches Verfahren (August 2001) bei 23 °C und einer relativen Luftfeuchte von 85 % im Verdampfungsraum (Klima D) gemessen, wobei die Basisschicht zu dem Verdampfizngsraum und die zweite Schicht zu dem Absorptionsraum gerichtet ist.

Bevorzugt hat die Basisschicht eine Wasserdampfdurchlässigkeit im Bereich von mindestens 0,5 g/(m²*d) bis 100 g/(m²*d), vorzugsweise von 0,75 g/(m²*d) bis 50 g/(m²*d), bevorzugter von 1,0 g/(m²*d) bis 40 g/(m²*d), besonders bevorzugt von 1,5 g/(m²*d) bis 35 g/(m²*d), ganz besonders bevorzugt von 2,0 g/(m²*d) bis 30 g/(m²*d), oder von 2,5 g/(m²*d) bis 25 g/(m²*d) oder am meisten bevorzugt von 3,0 g/(m²*d) bis 20 g/(m²*d).

Bevorzugt hat das Kunststoffmaterial der zweiten Schicht eine Wasserdampfdurchlässigkeit von mindestens über 0,1 g/(m²*d), vorzugsweise von über 0,3 g/(m²*d), bevorzugter von über 1,0 g/(m²*d), besonders bevorzugt von über 5 g/(m²*d), ganz besonders bevorzugt von über 10 g/(m²*d), oder von über 20 g/(m²*d) oder am meisten bevorzugt von über 30 g/(m²*d). Am allermeisten bevorzugt ist eine Wasserdampfdurchlässigkeit von maximal 100 g/(m²*d), bevorzugt von maximal 50 g/(m²*d) und insbesondere bevorzugt von 40 g/(m²*d).

Die erfindungsgemäße Mehrschichtfolie hat bevorzugt eine Wasserdampfdurchlässigkeit im Bereich von mindestens 0,5 g/(m²*d) bis 90 g/(m²*d), vorzugsweise von 1,0 g/(m²*d) bis 70 g/(m²*d), bevorzugter von 1,5 g/(m²*d) bis 50 g/(m²*d), besonders bevorzugt von 2,0 g/(m²*d) bis 30 g/(m²*d), ganz besonders bevorzugt von 2,5 g/(m²*d) bis 25 g/(m²*d), oder von 3,0 g/(m²*d) bis 20 g/(m²*d) oder am meisten bevorzugt von 5,0 g/(m²*d) bis 15 g/(m²*d).

In einer bevorzugten Ausführungsform ist die erfindungsgemäße Mehrschichtfolie nur eingeschränkt feuchteadaptiv. Wird die Wasserdampfdurchlässigkeit WDD2 in Anlehnung an DIN 53122-1, Teil 1 gemessen bei 23°C und einer relativen Luftfeuchtigkeit von 50 % r.F. im Verdampfungsraum (zum Beispiel gut ventilierter Klimaraum) und mit der Wasserdampfdurchlässigkeit WDD1 gemäß DIN 53122-1, Teil 1, gravimetrisches Verfahren (August 2001) bei 23°C und einer relativen Luftfeuchte von 85 % im Verdampfungsraum (Klima D) verglichen, so ist das Verhältnis WDD1/WDD2 kleiner 15, vorzugsweise kleiner 10, bevorzugter kleiner 8, besonders bevorzugt kleiner 6, ganz besonders bevorzugt kleiner 4 und am meisten bevorzugt kleiner 2.

In einer weiteren bevorzugten Ausführungsform ist die erfindungsgemäße Mehrschichtfolie nur eingeschränkt feuchteadaptiv im Hinblick auf die Eigenschaften bei hoher Luftfeuchtigkeit. Wird die Wasserdampfdurchlässigkeit WDD3 in Anlehnung an DIN 12572, Prüfbedingung C gemessen (Hinweise auf Verhalten von Stoffen bei hoher Luftfeuchtigkeit) und mit der Wasserdampfdurchlässigkeit WDD1 gemäß DIN 53122-1, Teil 1, gravimetrisches Verfahren (August 2001) bei 23°C und einer relativen Luftfeuchte von 85 % im Verdampfungsraum (Klima D) verglichen, so ist das Verhältnis WDD3/WDD1 kleiner 12, vorzugsweise kleiner 6, bevorzugter kleiner 4, besonders bevorzugt kleiner 3, ganz besonders bevorzugt kleiner 2 und am meisten bevorzugt kleiner 1,5.

Erfindungsgemäß bevorzugt ist die Basisschicht der erfindungsgemäßen Mehrschichtfolie in zumindest eine erste Richtung, bevorzugt in eine Herstellungsrichtung, dehnbar, und die Löcher der zweiten Schicht sind so angeordnet, dass auch die zweite Schicht in die erste Richtung dehnbar ist, wobei die Dehnbarkeit ausgehend vom unausgedehnten Zustand mindestens 20%, bevorzugt mindestens 35%, besonders bevorzugt mindestens 100% und am meisten bevorzugt mindestens 200% beträgt. Die Dehnbarkeit kann dabei bevorzugt durch geeignete Wahl des ersten und/oder zweiten Kunststoffmaterials erfolgen, wobei durch Größe und Lage der Löcher der zweiten Schicht die Dehnbarkeit dieser Schicht insbesondere gewährleistet sein soll. Als "Herstellungsrichtung" ist allgemein die Richtung anzusehen, in welcher beim Herstellungsprozess eine Bahn der entsprechenden Mehrschichtfolie erzeugt wird. Bevorzugt kann diese Bahn zu einer entsprechenden Rolle aufgewickelt werden. Durch die Dehnbarkeit in zumindest eine erste Richtung bietet die erfindungsgemäße Mehrschichtfolie bevorzugt eine besonders sichere und Leckage-freie Verlegbarkeit, insbesondere im Bereich von Fugen. Auch Verwerfungen treten dadurch weniger bzw. gar nicht auf, bzw. lassen sich somit ausgleichen.

Besonders bevorzugt ist die Basisschicht auch in eine zur ersten Richtung senkrechte zweite Richtung dehnbar und die Löcher der zweiten Schicht sind so angeordnet, dass auch die zweite Schicht in die zweite Richtung dehnbar ist, wobei die Dehnbarkeit ausgehend vom ungedehnten Zustand mindestens 20%, bevorzugt mindestens 35%, besonders bevorzugt mindestens 100% und am meisten bevorzugt mindestens 200% beträgt. Auch hier kann die Dehnbarkeit durch geeignete Materialauswahl, wie oben beschrieben, zusätzlich verbessert werden bzw. erzielt werden. Die Dehnbarkeit in die zweite Richtung soll allgemein bedeuten, dass die Mehrschichtfolie erfindungsgemäß besonders bevorzugt auch senkrecht zur ersten Richtung dehnbar ist, wobei selbstverständlich auch eine Dehnbarkeit in schrägen Winkeln zu der ersten Richtung und der zweiten Richtung in der Praxis möglich sein kann.

Die Mehrschichtfolie ist in einer bevorzugten Ausführungsform auch nach/bei einer Dehnung in Längs- und/oder Querrichtung zur Herstellungsrichtung noch dicht gegenüber entspanntem Wasser. Bevorzugt ist die Folie auch bei einer Dehnung von mindestens 20% in mindestens einer Richtung noch dicht gegenüber entspanntem Wasser, besonders bevorzugt bei einer Dehnung von mindestens 50% in mindestens einer Richtung noch dicht gegenüber entspanntem Wasser.

Gemäß einer bevorzugten Ausführungsform ist das erste Kunststoffmaterial ein wasserdampfdurchlässiges Material oder ein Polyolefinmaterial aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder Butylen oder Butadien oder Isopren oder einer Kombination davon, wobei das Kunststoffmaterial zumindest ein Material zum Erhöhen der Wasserdampfdurchlässigkeit enthält, bevorzugt aus Polyvinylalkohol, Poly(vinylpyrolidon), Acrylsäure-Homopolymere, Acrylsäure-Copolymere, Cellulosefasern, Polyurethane, Polyester, insbesondere Polyurethane und Polyester auf Basis von Polyether-Polyolen (beispielsweise PTMEG und PPO), Polyester-Polyolen oder aus Mineralien, besonders bevorzugt Calciumcarbonat, oder Styrol oder einem Gemisch aus Calciumcarbonat und Styrol. Die Wasserdampfdurchlässigkeit der Basisschicht wird dabei durch das zumindest eine Material zum Erhöhen der Wasserdampfdurchlässigkeit eingestellt.

Gemäß einer weiteren bevorzugten Ausführungsform ist das zweite Kunststoffmaterial ein Polyolefinmaterial z.B. aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon.

Erfindungsgemäß bevorzugt sind die Basisschicht und die zumindest eine zusätzliche zweite Schicht mit einer dazwischenliegenden Kopplungsschicht miteinander gekoppelt, wobei die Kopplungsschicht aus einem Haftkleber, bevorzugt aus Klebstoff oder einem Schmelzhaftkleber, aus einem Reaktivkleber (beispielsweise 2-Komponenten-Polyurethankleber), oder aus einem Polyolefinmaterial, bevorzugt aus Polyethylen der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon, besteht. Die Basisschicht und die zweite Schicht können bevorzugt auch durch eine Heißverschmelzung, beispielsweise durch Beflammung, Thermokaschierung oder Thermokalandrierung, gekoppelt sein.

In einer besonders bevorzugten Variante ist die Kopplungsschicht ein wasserdampffdurchlässiges Material oder ein Polyolefinmaterial aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder Butylen oder Butadien oder Isopren oder einer Kombination davon, wobei das Kunststoffmaterial zumindest ein Material zum Erhöhen der Wasserdampfdurchlässigkeit enthält, bevorzugt aus Polyvinylalkohol, Poly(vinylpyrolidon), Acrylsäure-Homopolymere, Acrylsäure-Copolymere, Cellulosefasern, Polyurethane, Polyester, insbesondere Polyurethane und Polyester auf Basis von Polyether-Polyolen (beispielsweise PTMEG und PPO), Polyester-Polyolen oder aus Mineralien, besonders bevorzugt Calciumcarbonat, oder Styrol oder einem Gemisch aus Calciumcarbonat und Styrol.

Diese erfindungsgemäß bevorzugte Gestaltung bietet eine variable Möglichkeit der Einstellung der geeigneten Produktparameter bei verhältnismäßig einfacher und kostengünstiger Herstellbarkeit der entsprechenden erfindungsgemäßen Mehrschichtfolie.

Gemäß einer bevorzugten Ausführungsform der erfindungsgemäßen Mehrschichtfolie weist die Kopplungsschicht eine Schichtdicke zwischen 0,0001 mm und 0,1mm, bevorzugt zwischen 0,0005 mm und 0,05mm und besonders bevorzugt zwischen 0,001 mm und 0,03mm auf, wobei die Kopplungsschicht auch bevorzugt mit Löchern versehen sein kann, welche mit den Löchern der zweiten Schicht fluchtend angeordnet sind, oder wobei sich die Kopplungsschicht bevorzugt über die gesamte Fläche zwischen der Basisschicht und der zweiten Schicht erstreckt. Die Kopplungsschicht, bzw. das Material der Kopplungsschicht kann aber auch punktartig oder in Streifen über die gesamte Fläche verteilt sein, insbesondere aufgebracht sein. Bei einfacher Herstellbarkeit kann somit eine weiter verbesserte sehr gute Kopplung und somit mechanische Stabilität der einzelnen Schichten der erfindungsgemäßen Mehrschichtfolie erreicht werden.

Besonders bevorzugt ist eine Ausführungsform der erfindungsgemäßen Mehrschichtfolie, bei welcher die erfindungsgemäße Mehrschichtfolie an zumindest einer der Oberflächen, bevorzugt an der Basisschicht und/oder an der zumindest einen zweiten Schicht, eine Haftkleberbeschichtung, bevorzugt aus Klebstoff oder einem Schmelzhaftkleber, aufweist. Diese Ausführungsform erlaubt es, bei geeigneter Wahl der Breite einer solchen Mehrschichtfolie entweder eine direkte Verklebung, und somit eine einfache Handhabbarkeit, einer solchen Mehrschichtfolie zu gewährleisten, bzw. eine solche bevorzugt gestaltete Mehrschichtfolie erfindungsgemäß als Klebeband zur Fugenabdichtung einzusetzen, wobei durch die erfindungsgemäße Einstellbarkeit der Wasserdampfdurchlässigkeit die Bildung von Kondenswasser im Bereich der zu verklebenden Kanten vermieden wird, was bei herkömmlichen Klebebändern des Standes der Technik, insbesondere Folienklebebändern, nicht möglich ist. Auch die bevorzugt gegebene Flexibilität bzw. Dehnbarkeit der erfindungsgemäßen Mehrschichtfolie ist dabei besonders von Vorteil, da Verwerfungen vermieden werden und Lücken im Fugenbereich nicht auftreten bzw. ausgeglichen werden können.

Um eine sehr gute mechanische Stabilität der erfindungsgemäß Mehrschichtfolie zu gewährleisten, weist die Basisschicht gemäß einer bevorzugten Ausführungsform der Erfindung eine Schichtdicke von mindestens 0,005 mm, bevorzugt von mindestens 0,01 mm, bevorzugter von mindestens 0,03 mm, besonders bevorzugt von mindestens 0,06 mm, noch bevorzugter von mindestens 0,09 mm und am meisten bevorzugt von mindestens 0,15 mm auf.

Zur Gewährleistung der mechanischen Stabilität weist gemäß einer bevorzugten Ausführungsform die zweite Schicht eine Schichtdicke von mindestens 0,002 mm, bevorzugt von mindestens 0,005 mm, besonders bevorzugt von mindestens 0,01 mm oder 0.02 mm, noch bevorzugter von mindestens 0,04 mm und am meisten bevorzugt von mindestens 0,08 mm auf.

In einer bevorzugten Ausführung weist die Mehrschichtfolie eine Schichtdicke von mindestens 0,03 mm, bevorzugt von mindestens 0,05 mm, besonders bevorzugt von mindestens 0,075 mm oder 0.1 mm, noch bevorzugter von mindestens 0,15 mm und am meisten bevorzugt von mindestens 0,2 mm auf.

Besonders bevorzugt ist eine Ausführungsform der erfindungsgemäßen Mehrschichtfolie, welche eine wasserdampfdurchlässigkeits-kontrollierende dritte Schicht aufweist, welche mit Löchern versehen ist, durch deren Anordnung ein definierter Flächenanteil entfernt ist, so dass die Wasserdampfdurchlässigkeit der Mehrschichtfolie eingestellt ist. Bezüglich dieser dritten Schicht gelten alle im Zusammenhang mit der Anordnung, Gestaltung und Kopplung der zweiten Schicht gemachten obigen Angaben entsprechend, wobei noch darauf hingewiesen ist, dass die Ausrichtung der Löcher der zweiten Schicht bevorzugt mit der Ausrichtung der Löcher der dritten Schicht fluchtend sein kann und dass die dritte Schicht auf der Seite der Basisschicht angeordnet sein kann, welche der zweiten Schicht gegenüberliegt. Es kann jedoch auch die Möglichkeit bestehen, die dritte Schicht durch eine geeignete Zwischenschicht auf der zweiten Schicht gekoppelt anzubringen. Auch die dritte Schicht kann entsprechend mit einer oben beschriebenen Haftkleberbeschichtung versehen sein.

Um die Wasserdampfdurchlässigkeit der erfindungsgemäßen Mehrschichtfolie über einen besonders großen Bereich einstellen zu können, beträgt der definierte entfernte Flächenanteil der zweiten Schicht (und/oder auch, falls vorhanden, der dritten Schicht) höchstens 80%, bevorzugt höchstens 60%, besonders bevorzugt höchstens 40% oder am meisten bevorzugt höchstens 30%. Bevorzugt beträgt der Mindestwert des definiert entfernten Flächenanteils der zweiten Schicht (und/oder auch, falls vorhanden, der dritten Schicht) 1 %.

Die Mehrschichtfolie eignet sich zwar auch ohne weitere Verstärkungen für den Einsatz als Folie zur Abdichtung im Hausbau. Die erfindungsgemäße Mehrschichtfolie kann aber in einer bevorzugten Ausführungsform für Abdichtungen mit besonders hoher mechanischer Belastung zusätzlich verstärkt werden. Geeignete Verstärkungen können sein: eine oder mehrere Verstärkungsschicht(en) aus hinzukaschierten Vliesen, Geweben oder Gelegen. Die Verstärkungsschicht(en) kann/können entweder als Zwischenschicht(en) eingearbeitet oder auf mindestens einer Außenseite hinzukaschiert sein.

Die erfindungsgemäße Mehrschichtfolie kann gemäß einer bevorzugten Ausführungsform eine Breite in einem Bereich von 400 mm bis 5000 mm aufweisen, bevorzugt in einem Bereich von 500 mm bis 4200 mm, noch bevorzugter in einem Bereich von 600 mm bis 3000 mm, besonders bevorzugt in einem Bereich von 800 mm bis 2500 mm und am meisten bevorzugt in einem Bereich von 900 mm bis 2000 mm. Dies betrifft bevorzugt die Anwendung als Folie zur Abdichtung beim Hausbau im Dachbereich.

Bevorzugt kann die erfindungsgemäße Mehrschichtfolie auch eine Breite in einem Bereich von 30 mm bis 400 mm, bevorzugt in einem Bereich von 40 mm bis 350 mm und besonders bevorzugt in einem Bereich von 60 mm bis 250 mm aufweisen, d.h. die erfindungsgemäße Mehrschichtfolie kann auch im Wesentlichen als bandartige Folie, insbesondere als Montage-Klebeband zur Abdichtung und/oder Verklebung von Fugen bei der Abdichtung beim Hausbau im Dachbereich Anwendung finden.

Bevorzugt kann die Mehrschichtfolie flammhemmend ausgerüstet werden. Hierzu kann das Kunststoffmaterial der Basisschicht und/oder der zweiten Schicht und/oder der Kopplungsschicht mit flammhemmenden Additiven wie beispielsweise Antimonverbindungen oder Phosphorverbindungen ausgerüstet werden.

Die erfindungsgemäße Mehrschichtfolie kann gemäß einer bevorzugten Ausführungsform licht- und UV-stabil ausgerüstet werden. Hierzu kann das Kunststoffmaterial der Basisschicht und/oder der zweiten Schicht und/oder der Kopplungsschicht mit Licht- und oder UV-Lichtstabilisatoren beispielsweise auf Basis anorganischer Verbindungen wie Zinkoxid oder Russ oder organischer Verbindungen wie beispielsweise aus der Gruppe der HALS (Hindered Amine Light Stabilizers) ausgerüstet werden.

Die erfindungsgemäße Mehrschichtfolie kann gemäß einer bevorzugten Ausführungsform antistatisch ausgerüstet werden. Hierzu kann das Kunststoffmaterial der Basisschicht und/oder der zweiten Schicht und/oder der Kopplungsschicht mit Antistatika beispielsweise auf Basis von Alkylaminen oder Amiden ausgerüstet werden.

Die oben beschriebene Mehrschichtfolie kann erfindungsgemäß als Klebeband, insbesondere zur Abdichtung beim Hausbau im Dachbereich, verwendet werden.

Die oben beschriebene Mehrschichtfolie kann erfindungsgemäß als Dampfbremse, insbesondere zur Abdichtung beim Hausbau im Dachbereich, verwendet werden.

Die oben beschriebene Mehrschichtfolie kann erfindungsgemäß als Aufdachfolie und/oder Fassadenfolie, insbesondere zur Abdichtung beim Hausbau im Dachbereich und/oder Wandbereich, verwendet werden.

Erfindungsgemäß kann auch ein System vorgesehen sein, welches aus der oben beschriebenen Mehrschichtfolie und einem Klebeband besteht, welches aus der oben beschriebenen Mehrschichtfolie besteht. Ein solches System bietet den speziellen Vorteil, dass dabei die Mehrschichtfolie und das dazugehörige Klebeband aus der entsprechenden Mehrschichtfolie gleiche oder zumindest im wesentliche gleiche Produkteigenschaften, insbesondere hinsichtlich der mechanischen Stabilität, Dehnbarkeit und Wasserdampfdurchlässigkeit, aufweisen, so dass in jedem Fall der Anwendung eine optimale Abdichtwirkung mit einem solchen System erzielbar ist.

Das erfindungsgemäße Verfahren zur Herstellung einer Mehrschichtfolie, die wasserdicht und wasserdampfdurchlässig ist, insbesondere zur Abdichtung beim Hausbau im Dachbereich, insbesondere einer Mehrschichtfolie mit den oben beschriebenen Eigenschaften, wobei die Wasserdampfdurchlässigkeit der Mehrschichtfolie eingestellt wird, ist gekennzeichnet durch die folgenden Schritte:
- Vorsehen einer wasserdampfdurchlässigen und für entspanntes Wasser wasserdichten Basisschicht aus einem ersten Kunststoffmaterial;
- Vorsehen zumindest einer wasserdampfdurchlässigkeits-kontrollierenden zweiten Schicht aus einem zweiten Kunststoffmaterial;
- Entfernen eines definierten Flächenanteils aus dem zweiten Kunststoffmaterial der zweiten Schicht durch Versehen der zweiten Schicht mit makroskopischen Löchern; und
- Koppeln der zweiten Schicht mit der Basisschicht, wobei nach der Koppelung der wasserdampfdurchlässigen Basisschicht und der zweiten Schicht mit definiert entferntem Flächenanteil die Wasserdampfdurchlässigkeit der Mehrschichtfolie gezielt eingestellt ist.

Bevorzugt wird eine wasserdampfdurchlässigkeits-kontrollierende dritte Schicht mit der Basisschicht gekoppelt, wobei die dritte Schicht vorher mit Löchern versehen wird, durch deren Anordnung ein definierter Flächenanteil dieser dritten Schicht entfernt ist.

Der Schritt des Koppelns erfolgt bevorzugt durch Heißverschmelzung, besonders bevorzugt durch Beflammung, oder bevorzugt durch Thermokaschierung oder bevorzugt durch Thermokalandrierung.

Die erfindungsgemäße Mehrschichtfolie wird im Folgenden anhand eines Ausführungsbeispiels im Zusammenhang mit der beigefügten Zeichnung näher beschrieben werden. Es zeigt
- Fig. 1: in einer Querschnittsansicht eine Mehrschichtfolie gemäß einer bevorzugten Ausführungsform der vorliegenden Erfindung;
- Fig. 2a: eine Draufsicht auf eine bevorzugte Ausführungsform der erfindungsgemäßen Mehrschichtfolie in unausgedehntem Zustand; und
- Fig. 2b: in Draufsicht eine Ausführungsform der erfindungsgemäßen Mehrschichtfolie der Fig. 2a in gedehntem Zustand.

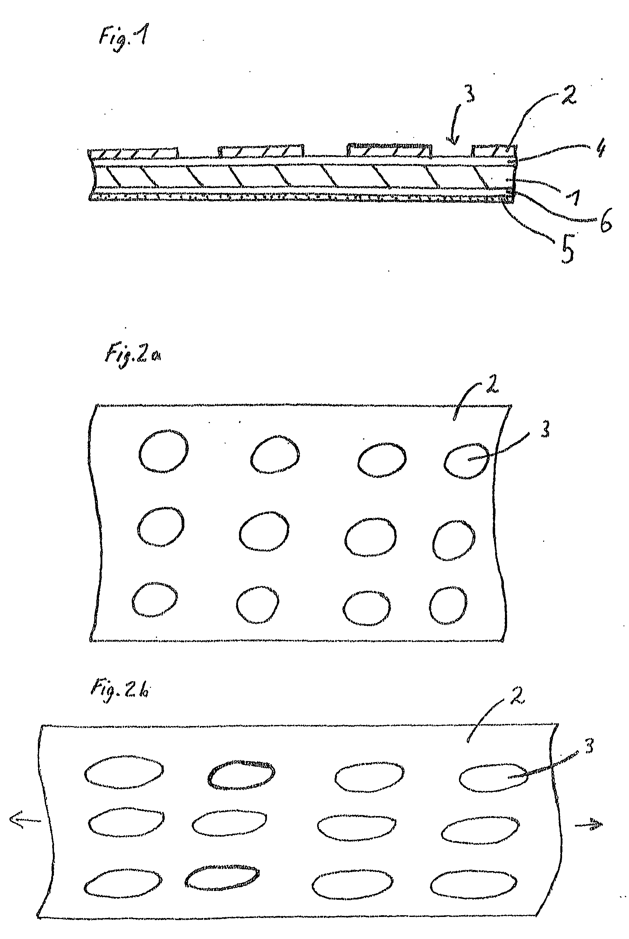

Fig. 1 zeigt in einer schematischen Querschnittsansicht eine bevorzugte Ausführungsform der erfindungsgemäßen Mehrschichtfolie. Die Mehrschichtfolie weist eine wasserdampfdurchlässige Basisschicht 1 aus einem ersten Kunststoffmaterial auf, sowie eine wasserdampfdurchlässigkeits-kontrollierende zweite Schicht 2 aus einem zweiten Kunststoffmaterial auf, wobei die Wasserdampfdurchlässigkeits-kontrollierende zweite Schicht 2 mit makroskopischen Löchern 3 versehen ist, durch deren Anordnung ein definierter Flächenanteil aus dem zweiten Kunststoffmaterial der zweiten Schicht entfernt ist, so dass die Wasserdampfdurchlässigkeit der Mehrschichtfolie eingestellt ist. Gemäß der in Fig. 1 gezeigten Ausführungsform weist die erfindungsgemäße Mehrschichtfolie eine Kopplungsschicht 4 zwischen der Basisschicht 1 und der zweiten Schicht 2 auf, durch welche die Basisschicht 1 und die zweite Schicht 2 aneinander gekoppelt sind. Die Kopplungsschicht 4 kann aus einem Haftkleber, bevorzugt aus Klebstoff oder einem Schmelzhaftkleber, aus einem Reaktivkleber (beispielsweise 2-Komponenten-Polyurethankleber), oder aus einem Polyolefinmaterial, bevorzugt aus Polyethylen der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon, und/oder aus einem wasserdampffdurchlässigen Material oder einem Polyolefinmaterial aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon, wobei das Kunststoffmaterial zumindest ein Material zum Erhöhen der Wasserdampfdurchlässigkeit enthält, bevorzugt aus Polyvinylalkohol, Poly(vinylpyrolidon), Acrylsäure-Homopolymere, Acrylsäure-Copolymere, Cellulosefasern, Polyurethane, Polyester, insbesondere Polyurethane und Polyester auf Basis von Polyether-Polyolen (beispielsweise PTMEG und PPO) oder aus Mineralien, besonders bevorzugt Calciumcarbonat, oder Styrol oder einem Gemisch aus Calciumcarbonat und Styrol, bestehen. Auf der Basisschicht 1 ist gemäß der in Fig. 1 gezeigten bevorzugten Ausftihrungsform eine Haftkleberbeschichtung 5, besonders bevorzugt aus Klebstoff oder einem Schmelzhaftkleber, vorgesehen, mit welcher die erfindungsgemäße Mehrschichtfolie verklebbar ist. Die erfindungsgemäße Mehrschichtfolie kann in einer bevorzugten Ausführungsform für Abdichtungen mit besonders hoher mechanischer Belastung zusätzlich verstärkt werden. Geeignete Verstärkungen können sein: eine oder mehrere Verstärkungsschicht(en) (nicht gezeigt) aus hinzukaschierten Vliesen, Geweben oder Gelegen. Die Verstärkungsschicht(en) kann/können entweder als Zwischenschicht(en) eingearbeitet oder auf mindestens einer Außenseite hinzukaschiert sein. Die Ausführungsform der Figur 1 zeigt eine Ausführungsform mit einer Verstärkungsschicht 6 an der Basisschicht 1.

Fig. 2a zeigt eine Ausführungsform der erfindungsgemäßen Mehrschichtfolie in einer Draufsicht, wobei die mit den Löchern 3 versehene zweite Schicht 2 in nicht ausgedehntem Zustand gezeigt ist. Die Löcher 3 sind gemäß Fig. 2a als kreisförmige Löcher gleichmäßig in Reihen und Spalten über die zweite Schicht 2 der dargestellten Mehrschichtfolie verteilt angeordnet. Die Form und Anordnung der Löcher 3 kann dabei je nach Anwendung auch z.B. rautenförmig erfolgen.

In Fig. 2b ist in Draufsicht die Ausführungsform der Mehrschichtfolie gemäß Fig. 2a gezeigt, jedoch im ausgedehnten Zustand. Die Dehnung wird dabei durch die beiden Pfeile angedeutet. Durch die Dehnung sind die gemäß der Ausführungsform eigentlich runden (im unausgedehnten Zustand) Löcher 3 nun im ausgedehnten Zustand elliptisch verformt. Durch diese Verformbarkeit ist die erfindungsgemäß bevorzugte Dehnbarkeit der erfindungsgemäßen Mehrschichtfolie gemäß der gezeigten Ausführungsform gegeben.

Die erfindungsgemäße Mehrschichtfolie ist relativ einfach und kostengünstig herzustellen und bietet eine einstellbare Wasserdampfdurchlässigkeit, Wasserdichtheit auch bei entspanntem Wasser sowie eine sehr gute mechanische Stabilität.

## Patentansprüche

1. Mehrschichtfolie, die wasserdicht und wasserdampfdurchlässig ist, insbesondere zur Abdichtung beim Hausbau im Dachbereich, mit einer wasserdampfdurchlässigen Basisschicht (1) aus einem ersten Kunststoffinaterial und mit zumindest einer mit der Basisschicht (1) gekoppelten wasserdampfdurchlässigkeits-kontrollierenden zweiten Schicht (2) aus einem zweiten Kunststoffmaterial, **dadurch gekennzeichnet, dass** die Basisschicht (1) wasserdicht für entspanntes Wasser ist, dass die Mehrschichtfolie dehnbar ist und reißfest ist, und dass die wasserdampfdurchlässigkeits-kontrollierende zweite Schicht (2) mit makroskopischen Löchern (3) versehen ist, durch deren Anordnung ein definierter Flächenanteil aus dem zweiten Kunststoffmaterial entfernt ist, so dass die Wasserdampfdurchlässigkeit der Mehrschichtfolie eingestellt ist.

2. Mehrschichtfolie nach Anspruch 1, **dadurch gekennzeichnet, dass** die reißfeste Mehrschichtfolie eine Reißfestigkeit nach DIN 53504 aufweist von über 3 N/mm², bevorzugt von über 5 N/mm², bevorzugter von über 7 N/mm², besonders bevorzugt von über 9 N/mm², ganz besonders bevorzugt von über 11 N/mm², oder von über 13 N/mm² oder am meisten bevorzugt von über 15 N/mm².

3. Mehrschichtfolie nach Anspruch 1 oder 2, **dadurch gekennzeichnet, dass** die makroskopischen Löcher (3) rund, oval, quadratisch, rechteckig, rautenförmig oder in anderer Weise gestaltet sind, wobei die Anordnung der makroskopischen Löcher (3) bevorzugt in Art einer dichtesten Kugelpackung, in Reihen und Spalten oder über die Fläche gleichmäßig verteilt und/oder zufällig angeordnet ist, und wobei der Durchmesser der makroskopischen Löcher (3) in einem Bereich von 0,1 mm bis 100 mm, vorzugsweise von 0,2 mm bis 50 mm, bevorzugter von 0,4 mm bis 20 mm, besonders bevorzugt von 0,5 mm bis 8 mm und am meisten bevorzugt von 0,6 mm bis 6 mm liegt.

4. Mehrschichtfolie nach einem der vorherigen Ansprüche, **dadurch gekennzeichnet, dass** die Wasserdampfdurchlässigkeit des ersten Kunststoffmaterials größer ist als die Wasserdampfdurchlässigkeit des zweiten Kunststoffmaterials.

5. Mehrschichtfolie nach einem der vorherigen Ansprüche, **dadurch gekennzeichnet, dass** die Basisschicht (1) eine Wasserdampfdurchlässigkeit im Bereich von mindestens 0,5 g/(m²*d) bis 100 g/(m²*d), vorzugsweise von 0,75 g/(m²*d) bis 50 g/(m²*d), bevorzugter von 1,0 g/(m²*d) bis 40 g/(m²*d), besonders bevorzugt von 1,5 g/(m²*d) bis 35 g/(m²*d), ganz besonders bevorzugt von 2,0 g/(m²*d) bis 30 g/(m²*d), oder von 2,5 g/(m²*d) bis 25 g/(m²*d) oder am meisten bevorzugt von 3,0 g/(m²*d) bis 20 g/(m²*d) aufweist.

6. Mehrschichtfolie nach einem der vorherigen Ansprüche, **dadurch gekennzeichnet, dass** das zweite Kunststoffmaterial der zweiten Schicht (2) eine Wasserdampfdurchlässigkeit von mindestens über 0,1 g/(m²*d), vorzugsweise von über 0,3 g/(m²*d), bevorzugter von über 1,0 g/(m²*d), besonders bevorzugt von über 5 g/(m²*d), ganz besonders bevorzugt von über 10 g/(m²*d), oder von über 20 g/(m²*d) oder am meisten bevorzugt von über 30 g/(m²*d) aufweist, und/oder am meisten bevorzugt die Wasserdampfdurchlässigkeit des zweiten Kunststoffmaterials der zweiten Schicht (2) maximal 100 g/(m²*d), bevorzugt maximal 50 g/(m²*d) und insbesondere bevorzugt 40 g/(m²*d) beträgt.

7. Mehrschichtfolie nach einem der vorherigen Ansprüche, **dadurch gekennzeichnet, dass** die Mehrschichtfolie eine Wasserdampfdurchlässigkeit im Bereich von mindestens 0,5 g/(m²*d) bis 90 g/(m²*d), vorzugsweise von 1,0 g/(m²*d) bis 70 g/(m²*d), bevorzugter von 1,5 g/(m²*d) bis 50 g/(m²*d), besonders bevorzugt von 2,0 g/(m²*d) bis 30 g/(m²*d), ganz besonders bevorzugt von 2,5 g/(m²*d) bis 25 g/(m²*d), oder von 3,0 g/(m²*d) bis 20 g/(m²*d) oder am meisten bevorzugt von 5,0 g/(m²*d) bis 15 g/(m²*d) aufweist.

8. Mehrschichtfolie nach einem der vorherigen Ansprüche, **dadurch gekennzeichnet, dass** die Mehrschichtfolie eingeschränkt feuchteadaptiv ist, mit einer Wasserdampfdurchlässigkeit WDD2 (gemessen in Anlehnung an DIN 53122-1, Teil 1, bei 23°C und mit einer relativen Luftfeuchtigkeit von 50 % r.F. im Verdampfungsraum) und mit der Wasserdampfdurchlässigkeit WDD1 (gemäß DIN 53122-1, Teil 1, gravimetrisches Verfahren (August 2001) bei 23°C und einer relativen Luftfeuchte von 85 % im Verdampfungsraum (Klima D)), wobei das Verhältnis WDD1/WDD2 kleiner 15, vorzugsweise kleiner 10, bevorzugter kleiner 8, besonders bevorzugt kleiner 6, ganz besonders bevorzugt kleiner 4 und am meisten bevorzugt kleiner 2 ist.

9. Mehrschichtfolie nach einem der vorherigen Ansprüche, **dadurch gekennzeichnet, dass** die Basisschicht (1) in zumindest eine erste Richtung, bevorzugt eine Herstellungsrichtung, dehnbar ist, und dass die makroskopischen Löcher (3) der zweiten Schicht (2) so angeordnet sind, dass auch die zweite Schicht (2) in die erste Richtung dehnbar ist, wobei die Dehnbarkeit ausgehend vom ungedehnten Zustand mindestens 20%, bevorzugt mindestens 35%, besonders bevorzugt mindestens 100% und am meisten bevorzugt mindestens 200% beträgt.

10. Mehrschichtfolie nach Anspruch 9, **dadurch gekennzeichnet, dass** die Basisschicht (1) auch in eine zur ersten Richtung senkrechte zweite Richtung dehnbar ist, und dass die makroskopischen Löcher (3) der zweiten Schicht (2) so angeordnet sind, dass auch die zweite Schicht (2) in die zweite Richtung dehnbar ist, wobei die Dehnbarkeit ausgehend vom ungedehnten Zustand mindestens 20%, bevorzugt mindestens 35%, besonders bevorzugt mindestens 100% und am meisten bevorzugt mindestens 200% beträgt.

11. Mehrschichtfolie nach einem der vorherigen Ansprüche, **dadurch gekennzeichnet, dass** die Mehrschichtfolie auch nach und/oder bei einer Dehnung in Längs- und/oder Querrichtung zur Herstellungsrichtung noch dicht gegenüber entspanntem Wasser ist, bevorzugt bei einer Dehnung von mindestens 20% in mindestens einer Richtung noch dicht gegenüber entspanntem Wasser ist, besonders bevorzugt bei einer Dehnung von mindestens 50% in mindestens einer Richtung noch dicht gegenüber entspanntem Wasser ist.

12. Mehrschichtfolie nach einem der vorherigen Ansprüche, **dadurch gekennzeichnet, dass** das erste Kunststoffmaterial ein wasserdampfdurchlässiges Material oder ein Polyolefinmaterial aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder Butylen oder Butadien oder Isopren oder einer Kombination davon ist, wobei das erste Kunststoffmaterial zumindest ein Material zur Erhöhung der Wasserdampfdurchlässigkeit enthält, bevorzugt aus Polyvinylalkohol, Poly(vinylpyrolidon), Acrylsäure-Homopolymere, Acrylsäure-Copolymere, Cellulosefasern, Polyurethane, Polyester, insbesondere Polyurethane und Polyester auf Basis von Polyether-Polyolen (beispielsweise PTMEG und PPO), Polyester-Polyolen oder aus Mineralien, besonders bevorzugt Calciumcarbonat, oder Styrol oder einem Gemisch aus Calciumcarbonat und Styrol.

13. Mehrschichtfolie nach einem der vorherigen Ansprüche, **dadurch gekennzeichnet, dass** das zweite Kunststoffmaterial ein Polyolefinmaterial z.B. aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon, ist.

14. Mehrschichtfolie nach einem der Ansprüche 1 bis 13, **dadurch gekennzeichnet, dass** die Basisschicht (1) und die zweite Schicht (2) durch eine Heißverschmelzung, vorzugsweise durch Beflammung, oder durch Thermokaschierung oder durch Thennokalandrierung miteinander gekoppelt sind.

15. Mehrschichtfolie nach einem der Ansprüche 1 bis 13, **dadurch gekennzeichnet, dass** die Basisschicht (1) und die zweite Schicht (2) mit einer dazwischenliegende Kopplungsschicht (4) miteinander gekoppelt sind, wobei die Kopplungsschicht (4) bevorzugt aus einem Haftkleber, bevorzugter aus Klebstoff oder einem Schmelzhaftkleber, aus einem Reaktivkleber, beispielsweise 2-Komponenten-Polyurethankleber, oder bevorzugt aus einem Polyolefinmaterial, bevorzugter aus Polyethylen der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder einer Kombination davon, besteht.

16. Mehrschichtfolie nach Anspruch 15, **dadurch gekennzeichnet, dass** die Kopplungsschicht (4) aus einem wasserdampffdurchlässigen Material oder ein Polyolefinmaterial aus Polyethylen, z.B. der Qualitäten LDPE (Low Density Polyethylen), MDPE (Medium Density Polyethylen), HDPE (High Density Polyethylen) oder LLDPE (Linear Low Density Polyethylen), Polypropylen oder einem Copolymer bestehend aus Ethylen oder Propylen oder Butylen oder Butadien oder Isopren oder einer Kombination davon besteht, wobei das Kunststoffmaterial zumindest ein Material zum Erhöhen der Wasserdampfdurchlässigkeit enthält, bevorzugt aus Polyvinylalkohol, Poly(vinylpyrolidon), Acrylsäure-Homopolymere, Acrylsäure-Copolymere, Cellulosefasern, Polyurethane, Polyester, insbesondere Polyurethane und Polyester auf Basis von Polyether-Polyolen, beispielsweise PTMEG und PPO, Polyester-Polyolen oder aus Mineralien, besonders bevorzugt Calciumcarbonat, oder Styrol oder einem Gemisch aus Calciumcarbonat und Styrol.

17. Mehrschichtfolie nach Anspruch 15 oder 16, **dadurch gekennzeichnet, dass** die Kopplungsschicht (4) eine Schichtdicke zwischen 0,0001 mm und 0,1mm, bevorzugt zwischen 0,0005 mm und 0,05mm und besonders bevorzugt zwischen 0,001 mm und 0,03mm aufweist, wobei die Kopplungsschicht (4) bevorzugt mit Löchern versehen ist, welche mit den makroskopischen Löchern (3) der zweiten Schicht (2) fluchtend angeordnet sind, oder wobei sich die Kopplungsschicht (4) bevorzugt über die gesamte Fläche zwischen der Basisschicht (1) und der zweiten Schicht (2) erstreckt.

18. Mehrschichtfolie nach einem der vorherigen Ansprüche, **dadurch gekennzeichnet, dass** die Mehrschichtfolie an zumindest einer der Oberflächen eine Haftkleberbeschichtung (5), bevorzugt aus Klebstoff oder einem Schmelzhaftkleber, aufweist.

19. Mehrschichtfolie nach einem der vorherigen Ansprüche, **dadurch gekennzeichnet, dass** die Basisschicht (1) eine Schichtdicke von mindestens 0,005 mm, bevorzugt von mindestens 0,01 mm, bevorzugter von mindestens 0,03 mm, besonders bevorzugt von mindestens 0,06 mm, noch bevorzugter von mindestens 0,09 mm und am meisten bevorzugt von mindestens 0,15 mm aufweist.

20. Mehrschichtfolie nach einem der vorherigen Ansprüche, **dadurch gekennzeichnet, dass** die zweite Schicht (2) eine Schichtdicke von mindestens 0,002 mm, bevorzugt von mindestens 0,005 mm, besonders bevorzugt von mindestens 0,01 mm oder 0,02 mm, noch bevorzugter von mindestens 0,04 mm und am meisten bevorzugt von mindestens 0,08 mm aufweist.

21. Mehrschichtfolie nach einem der vorherigen Ansprüche, **dadurch gekennzeichnet, dass** die Mehrschichtfolie eine Schichtdicke von mindestens 0,03 mm, bevorzugt von mindestens 0,05 mm, besonders bevorzugt von mindestens 0,075 mm oder 0,1 mm, noch bevorzugter von mindestens 0,15 mm und am meisten bevorzugt von mindestens 0,2 mm aufweist.

22. Mehrschichtfolie nach einem der vorherigen Ansprüche, **dadurch gekennzeichnet, dass** die Mehrschichtfolie eine wasserdampfdurchlässigkeits-kontrollierende dritte Schicht aufweist, welche mit Löchern versehen ist, durch deren Anordnung ein definierter Flächenanteil entfernt ist, so dass die Wasserdampfdurchlässigkeit der Mehrschichtfolie eingestellt ist.

23. Mehrschichtfolie nach einem der vorherigen Ansprüche, **dadurch gekennzeichnet, dass** der definierte entfernte Flächenanteil höchstens 80%, bevorzugt höchstens 60%, besonders bevorzugt höchstens 40% oder am meisten bevorzugt höchstens 30% beträgt.

24. Mehrschichtfolie nach einem der vorherigen Ansprüche, . **dadurch gekennzeichnet, dass** der definierte entfernte Flächenanteil mindestens 1 % beträgt.

25. Mehrschichtfolie nach einem der vorherigen Ansprüche, **dadurch gekennzeichnet, dass** die Mehrschichtfolie eine oder mehrere Verstärkungsschicht(en) (6) aufweist, bevorzugt aus hinzukaschiertem Vlies, Gewebe oder Gelege, wobei die Verstärkungsschicht(en) (6) als Zwischenschicht(en) eingearbeitet oder auf mindestens einer Außenseite der Mehrschichtfolie hinzukaschiert sein kann/können.

26. Mehrschichtfolie nach einem der Ansprüche 1 bis 25, **dadurch gekennzeichnet, dass** die Breite der Mehrschichtfolie in einem Bereich von 400 mm bis 5000 mm liegt, bevorzugt in einem Bereich von 500 mm bis 4200 mm, bevorzugter in einem Bereich von 600 mm bis 3000 mm, besonders bevorzugt in einem Bereich von 800 mm bis 2500 mm und am meisten bevorzugt in einem Bereich von 900 mm bis 2000 mm.

27. Mehrschichtfolie nach einem der Ansprüche 1 bis 25, **dadurch gekennzeichnet, dass** die Breite der Mehrschichtfolie in einem Bereich von 40 mm bis 400 mm liegt, bevorzugt in einem Bereich von 30 mm bis 350 mm und besonders bevorzugt in einem Bereich von 60 mm bis 250 mm.

28. Mehrschichtfolie nach einem der Ansprüche 1 bis 27 oder 15 bis 27, **dadurch gekennzeichnet, dass** die Mehrschichtfolie flammhemmend ausgerüstet ist, wobei das Material der Basisschicht (1) und/oder der zweiten Schicht (2) und/oder der Kopplungsschicht (4) mit flammhemmenden Additiven, wie Antimonverbindungen oder Phosphorverbindungen, ausgerüstet sind.

29. Mehrschichtfolie nach einem der Ansprüche 1 bis 28 oder 15 bis 28, **dadurch gekennzeichnet, dass** die Mehrschichtfolie licht- und UV-stabil ausgerüstet ist, wobei das Material der Basisschicht (1) und/oder der zweiten Schicht (2) und/oder der Kopplungsschicht (4) mit Licht- und oder UV-Lichtstabilisatoren, z.B. auf Basis anorganischer Verbindungen wie Zinkoxid oder Russ oder organischer Verbindungen wie beispielsweise aus der Gruppe der HALS , d.h. Hindered Amine Light Stabilizers, ausgerüstet sind.

30. Verwendung einer Mehrschichtfolie nach einem der Ansprüche 18 bis 29 als Klebeband, insbesondere zur Abdichtung beim Hausbau im Dachbereich.

31. Verwendung einer Mehrschichtfolie nach einem der Ansprüche 1 bis 29 als Dampfbremse, insbesondere zur Abdichtung beim Hausbau im Dachbereich.

32. Verwendung einer Mehrschichtfolie nach einem der Ansprüche 1 bis 29 als Aufdachfolie und/oder Fassadenfolie, insbesondere zur Abdichtung beim Hausbau im Dachbereich und/oder Wandbereich.

33. System, welches aus der Mehrschichtfolie nach einem der Ansprüche 1 bis 29 und einem Klebeband besteht, welches aus der Mehrschichtfolie nach einem der Ansprüche 18 bis 29 besteht.

34. Verfahren zur Herstellung einer Mehrschichtfolie, die wasserdicht und wasserdampfdurchlässig ist, insbesondere zur Abdichtung beim Hausbau im Dachbereich, insbesondere einer Mehrschichtfolie gemäß den Ansprüchen 1 bis 29, wobei die Wasserdampfdurchlässigkeit der Mehrschichtfolie eingestellt wird, **gekennzeichnet durch** die folgenden Schritte:
- Vorsehen einer wasserdampfdurchlässigen und für entspanntes Wasser wasserdichten Basisschicht aus einem ersten Kunststoffmaterial;
- Vorsehen zumindest einer wasserdampfdurchlässigkeits-kontrollierenden zweiten Schicht aus einem zweiten Kunststoffmaterial;
- Entfernen eines definierten Flächenanteils aus dem zweiten Kunststoffmaterial der zweiten Schicht **durch** Versehen der zweiten Schicht mit makroskopischen Löchern; und
- Koppeln der zweiten Schicht mit der Basisschicht, wobei nach der Koppelung der wasserdampfdurchlässigen Basisschicht und der zweiten Schicht mit definiert entferntem Flächenanteil die Wasserdampfdurchlässigkeit der Mehrschichtfolie gezielt eingestellt ist.

35. Verfahren gemäß Anspruch 34, **dadurch gekennzeichnet, dass** eine wasserdampfdurchlässigkeits-kontrollierende dritte Schicht mit der Basisschicht gekoppelt wird, wobei die dritte Schicht vorher mit Löchern versehen wird, durch deren Anordnung ein definierter Flächenanteil dieser dritten Schicht entfernt ist.

36. Verfahren gemäß Anspruch 34 oder 35, **dadurch gekennzeichnet, dass** der Schritt des Koppelns durch Heißverschmelzung, vorzugsweise durch Beflammung, oder durch Thermokaschierung oder durch Thermokalandrierung erfolgt.
